# EUROPEAN PATENT APPLICATION

(11) **EP 4 811 902 A1**
(43) Date of publication of application: **23.09.2026**
(21) Application number: 24890632.3
(22) Date of filing: 11.11.2024
(51) Int. Cl.: H04W 72/0457

(54) **BWP DETERMINATION METHOD AND APPARATUS, DCI SENDING METHOD AND APPARATUS, AND TERMINAL AND NETWORK-SIDE DEVICE**

(30) Priority: 14.11.2023 CN 202311514133
(71) Applicant: Vivo Mobile Communication Co., Ltd., Dongguan, Guangdong 523863 (CN)
(72) Inventor: LI, Dongru, Dongguan, Guangdong 523863 (CN); LIU, Siqi, Dongguan, Guangdong 523863 (CN); JI, Zichao, Dongguan, Guangdong 523863 (CN); LI, Gen, Dongguan, Guangdong 523863 (CN)
(74) Representative: Walaski, Jan Filip
(86) International application number: PCT/CN2024/131372
(87) International publication number: WO 2025/103277

(57) **Abstract**

The present application belongs to the technical field of communications. Disclosed are a BWP determination method and apparatus, a DCI sending method and apparatus, and a terminal and a network-side device. The BWP determination method in the embodiments of the present application comprises: a terminal receiving first DCI, wherein the first DCI includes a BWP indication; and when the first DCI meets an enabling condition of a dormancy indication, the terminal determining a target BWP on the basis of at least one of the BWP indication and the dormancy indication.

## Description

### CROSS-REFERENCE TO RELATED APPLICATIONS

This application claims priority to Chinese Patent Application No. 202311514133.6, filed with the China National Intellectual Property Administration on November 14, 2023, and entitled "BWP DETERMINING METHOD, DCI SENDING METHOD, APPARATUS, TERMINAL, AND NETWORK-SIDE DEVICE", which is incorporated herein by reference in its entirety.

### TECHNICAL FIELD

This application belongs to the field of communication technologies, and specifically relates to a bandwidth part (Bandwidth Part, BWP) determining method, a downlink control information (Downlink Control Information, DCI) sending method, an apparatus, a terminal, and a network-side device.

### BACKGROUND

In some cases, DCI delivered by a network side to a terminal includes a BWP indicator, and the BWP indicator indicates the terminal to switch to a target BWP. In addition, in some systems, the terminal is indicated by using DCI to enter dormancy, to reduce power consumption of the terminal, such as by carrying a dormancy indicator in the DCI. However, dormancy is mainly achieved by the terminal switching to a dormant BWP (dormant BWP) to enable the terminal to enter a dormant state. It can be learned that the dormancy indicator also indicates the terminal to switch to the target BWP. In some related technologies, a behavior of the terminal is uncertain in a case that the DCI obtained by the terminal includes a BWP indicator and a dormancy indicator, reducing communication performance.

### SUMMARY

Embodiments of this application provide a BWP determining method, a DCI sending method, an apparatus, a terminal, and a network-side device, to resolve a problem that uncertainty of a terminal's behavior leads to poor communication performance of the terminal when DCI obtained by the terminal includes a BWP indicator and a dormancy indicator.

According to a first aspect, a BWP determining method is provided, including:
receiving, by a terminal, first downlink control information DCI, where the first DCI includes a bandwidth part BWP indicator; and
determining, by the terminal, a target BWP based on at least one of the BWP indicator or a dormancy indicator in a case that the first DCI satisfies an enabling condition of the dormancy indicator.

According to a second aspect, a DCI sending method is provided, including:
sending, by a network-side device, first downlink control information DCI to a terminal, where the first DCI includes a bandwidth part BWP indicator, and the first DCI satisfies an enabling condition of a dormancy indicator.

According to a third aspect, a BWP determining apparatus is provided, including:
a receiving module, configured to receive first downlink control information DCI, where the first DCI includes a bandwidth part BWP indicator; and
a determining module, configured to determine a target BWP based on at least one of the BWP indicator or a dormancy indicator in a case that the first DCI satisfies an enabling condition of the dormancy indicator.

According to a fourth aspect, a DCI sending apparatus is provided, including:
a sending module, configured to send first downlink control information DCI to a terminal, where the first DCI includes a bandwidth part BWP indicator, and the first DCI satisfies an enabling condition of a dormancy indicator.

According to a fifth aspect, a terminal is provided. The terminal includes a processor and a memory. The memory stores a program or instructions runnable on the processor. When the program or instructions are executed by the processor, the steps of the BWP determining method provided by embodiments of this application are implemented.

According to a sixth aspect, a terminal is provided, including a processor and a communication interface. The communication interface is configured to receive first downlink control information DCI, where the first DCI includes a BWP indicator. The processor is configured for the terminal to determine a target BWP based on at least one of the BWP indicator or a dormancy indicator in a case that the first DCI satisfies an enabling condition of the dormancy indicator.

According to a seventh aspect, a network-side device is provided. The network-side device includes a processor and a memory. The memory stores a program or instructions runnable on the processor. When the program or instructions are executed by the processor, the steps of the DCI sending method provided by embodiments of this application are implemented.

According to an eighth aspect, a network-side device is provided, including a processor and a communication interface. The communication interface sends first downlink control information DCI to a terminal. The first DCI includes a bandwidth part BWP indicator, and the first DCI satisfies an enabling condition of a dormancy indicator.

According to a ninth aspect, a readable storage medium is provided. A program or instructions are stored on the readable storage medium. When the program or instructions are executed by a processor, the steps of the BWP determining method provided by embodiments of this application are implemented, or when the program or instructions are executed by a processor, the steps of the DCI sending method provided by embodiments of this application are implemented.

According to a tenth aspect, a wireless communication system is provided, including a terminal and a network-side device. The terminal may be used to perform the steps of the BWP determining method provided by embodiments of this application, and the network-side device may be used to perform the steps of the DCI sending method provided by embodiments of this application.

According to an eleventh aspect, a chip is provided. The chip includes a processor and a communication interface. The communication interface is coupled to the processor. The processor is configured to run a program or instructions to implement the BWP determining method provided by embodiments of this application, or the processor is configured to run a program or instructions to implement the DCI sending method provided by embodiments of this application.

According to a twelfth aspect, a computer program/program product is provided. The computer program/program product is stored in a storage medium, and the program/program product is executed by at least one processor to implement the steps of the BWP determining method provided by embodiments of this application, or the program/program product is executed by at least one processor to implement the steps of the DCI sending method provided by embodiments of this application.

In embodiments of this application, the terminal receives first downlink control information DCI, where the first DCI includes a bandwidth part BWP indicator. The terminal determines a target BWP based on at least one of the BWP indicator or a dormancy indicator in a case that the first DCI satisfies an enabling condition of the dormancy indicator. In this way, in a case that the first DCI includes a BWP indicator and a dormancy indicator, at least one of the BWP indicator or the dormancy indicator may be executed to determine the target BWP, so as to determine a behavior of the terminal, thereby improving the communication performance of the terminal.

### BRIEF DESCRIPTION OF DRAWINGS

FIG. 1 is a block diagram of a wireless communication system to which an embodiment of this application is applicable;
FIG. 2 is a flowchart of a BWP determining method according to an embodiment of this application;
FIG. 3 is a flowchart of a DCI sending method according to an embodiment of this application;
FIG. 4 is a structural diagram of a BWP determining apparatus according to an embodiment of this application;
FIG. 5 is a structural diagram of a DCI sending apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The technical solutions in embodiments of this application are clearly described below with reference to the accompanying drawings in embodiments of this application. It is clear that the described embodiments are some embodiments of this application, but not all embodiments. Based on embodiments in this application, all other embodiments obtained by those of ordinary skill in the art belong to the protection scope of this application.

The terms "first", "second", and the like in this application are used to distinguish between similar objects, but are not used to describe a specific order or sequence. It should be understood that the terms used in this way are interchangeable under appropriate circumstances, so that embodiments of this application can be implemented in sequences other than those illustrated or described herein, and the objects distinguished between by "first" and "second" are usually of one type, and a quantity of objects is not limited. For example, the first object may be one or more. In addition, the "or" in this application indicates at least one of the connected objects. For example, "A or B" encompasses three schemes: scheme one includes A but not B; scheme two includes B but not A; scheme three includes both A and B. The character "/" generally indicates that the preceding and following related objects are in an "or" relationship.

The term "indication" in this application may be a direct indication (or explicit indication), and may also be an indirect indication (or implicit indication). The direct indication may be understood as: A sender explicitly informs a receiver of specific information, content to be executed, or requested results in sent indication. The indirect indication may be understood as: A receiver determines corresponding information based on an indication sent by the sender, or makes a judgment and determines an operation to be executed or a requested result based on a result of the judgment.

It is worth pointing out that the technology described in embodiments of this application is not limited to a long term evolution (Long Term Evolution, LTE)/LTE-advanced (LTE-Advanced, LTE-A) system, and may also be used in another wireless communication system, such as code division multiple access (Code Division Multiple Access, CDMA) system, time division multiple access (Time Division Multiple Access, TDMA) system, frequency division multiple access (Frequency Division Multiple Access, FDMA) system, orthogonal frequency division multiple access (Orthogonal Frequency Division Multiple Access, OFDMA) system, single-carrier frequency-division multiple access (Single-carrier Frequency-Division Multiple Access, SC-FDMA) system, or another system. The terms "system" and "network" in embodiments of this application are often used interchangeably, and the described technology may be used not only in the above systems and radio technologies, but also in other systems and radio technologies. The following description describes the new radio (New Radio, NR) system for exemplary purposes, and NR terminology is used in most of the following descriptions, but these technologies may also be applied to systems other than the NR system, such as the 6^{th} Generation (6^{th} Generation, 6G) communication system.

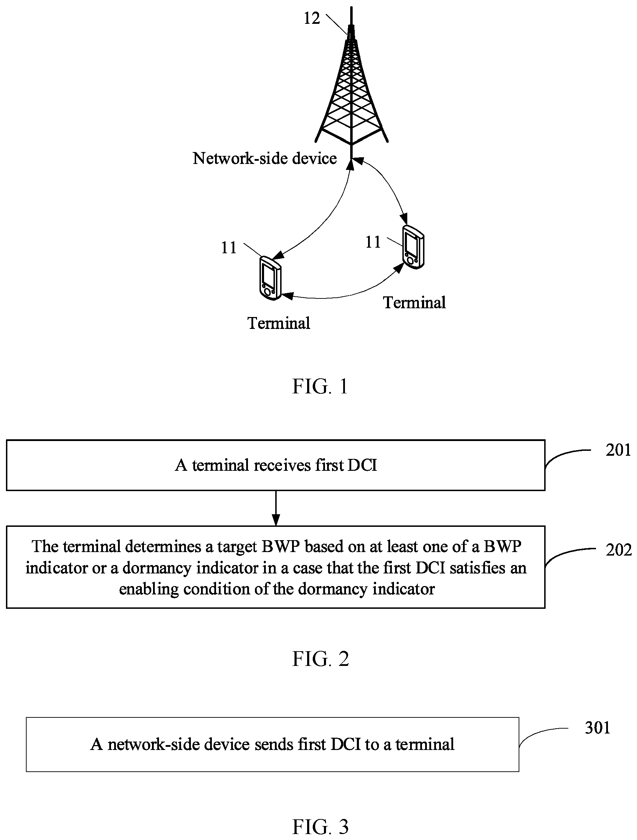

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (a home device with a wireless communication function, such as refrigerator, TV, washing machine, or furniture), a game console, a personal computer (Personal Computer, PC), a teller machine, a self-service machine, or another terminal side device. The wearable device includes a smart watch, a smart band, a smart headphone, smart glasses, smart jewelry (a smart bracelet, a smart hand chain, a smart ring, a smart necklace, a smart anklet, a smart foot chain, or the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in embodiments of this application.

The network-side device 12 may include an access network device or a core network device. The access network device may also be referred to as a radio access network (Radio Access Network, RAN) device, radio access network function, or radio access network unit. The access network device may include a base station, a wireless local area network (Wireless Local Area Network, WLAN) access point (access point, AP), or a wireless fidelity (Wireless Fidelity, WiFi) node, and the like. The base station may be referred to as NodeB (NodeB, NB), evolved NodeB (evolved NodeB, eNB), next generation Node B (the next generation NodeB, gNB), new radio NodeB (New Radio NodeB, NR NodeB), access point, relay station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home NodeB (home NodeB, HNB), home evolved NodeB (home evolved NodeB), transmission reception point (Transmission Reception Point, TRP), or some other suitable term in the field, as long as the same technical effect is achieved. The base station is not limited to a specific technical term. It should be noted that in embodiments of this application, the base station in the NR system is used as an example for introduction, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, L-NEF), a binding support function (Binding Support Function, BSF), an application function (Application Function, AF), and the like. It should be noted that in embodiments of this application, the core network device in the NR system is used as an example for introduction, and a specific type of the core network device is not limited.

In some embodiments, the first DCI may be in DCI format (DCI format 3-0) or (DCI format 3-1), and the first DCI may schedule physical uplink shared channels (Physical Uplink Shared Channel, PUSCH) or physical downlink shared channels (Physical downlink shared channel, PDSCH) of a plurality of cells.

The plurality of cells may be grouped into a plurality of cell sets (cell set), for example, cells (cell1/2/3/4/5/6/7/8) are grouped into two cell sets: cell set (cell1/2/3/4) and cell set (cell5/6/7/8).

A cell set may be divided into a plurality of cell combinations (cell combination). For example, a cell set (cell1/2/3/4) may include cell combinations (cell1/2/3, cell1/2/4, cell1/3).

One piece of first DCI may schedule or indicate one cell combination at a time, and there are following two types of specific scheduling or indication methods:
Method 1: A scheduled cell indicator based (scheduled cell indicator based) method, such as indicating an index corresponding to a group of scheduled cells, for example, radio resource control (Radio Resource Control, RRC) signaling configures a cell combination table for each cell set, each cell combination table has one corresponding index, and the first DCI carries one field indicating one index. For example, '01' corresponds to cell1/3; in this case, if the first DCI indicates '01', cell1/3 is indicated, and the first DCI carries only a frequency domain resource assignment (frequency domain resource assignment, FDRA) field of cell1/3.
Method 2: An FDRA based (FDRA based) method, to be specific, judging whether each cell is scheduled depends on whether an FDRA field corresponding to the cell is valid. In this case, the first DCI carries FDRA fields of cell1/2/3/4; and if a FDRA field indicates an invalid value, it indicates that the cell is not scheduled.

In some embodiments, a definition of an invalid value of uplink first DCI or DCI format 0-3 is as follows:
If all bits of a block are set to 0 for resource allocation type 0, or set to 1 for resource allocation type 1, or set to 0 or 1 for dynamic switching resource allocation type, or set to 0 for resource allocation type 2 (where µ=1), or set to 1 for resource allocation type 2 (where µ=0), a cell corresponding to the block is not scheduled.

In some embodiments, a definition of an invalid value of downlink first DCI or an invalid value of DCI format 1-3 is as follows:
If all bits of a block are set to 0 for resource allocation type 0, or set to 1 for resource allocation type 1, or set to 0 or 1 for dynamic switching resource allocation type, a cell corresponding to the block is not scheduled.

In some embodiments, fields in the first DCI are divided into a plurality of types, where type 2 (type2) means that each cell has its own separate field in the first DCI indication, and typical type 2 fields include the following:
FDRA;
modulation and coding scheme of transport block 1;
new data indicator of transport block 1;
redundancy version of transport block 1;
HARQ process number; and
DMRS initialization.

A meaning of type 1 (Type1) field is that all cells share a same indicator field in the first DCI indication, type 1 is further divided into 1A/1B, and typical type 1 field includes:
a BWP indicator.

There are also some fields with a configurable type. For example, for an antenna port field, a network-side device explicitly configures in RRC that a type of this field is Type 1A or Type 2.

In some embodiments, for invalid FDRA (Invalid FDRA), bits of fields such as modulation and coding scheme (Modulation and coding scheme, MCS), new data indicator (New data indicator, NDI), redundancy version (Redundancy version, RV), HARQ process, demodulation reference signal (Demodulation Reference Signal, DMRS), and the like of a cell in these cells may be reused for the following functions after FDRA of a cell or some cells is set to an invalid value: dormancy case 2 (dormancy case2), enhanced type 3 HARQ codebook, and HARQ retransmission.

In some embodiments, the first DCI may carry dormancy indication information, and may support the following solutions:
Case 1: Carry an explicit dormancy indicator (dormancy indication), explicitly adding a few bits in the first DCI for indicating dormancy.
Case 2: Reuse a field of a cell to indicate a dormancy indicator, where as mentioned above, after the FDRA is set to invalid, bits corresponding to some fields may be used for other purposes, for example, no new bits are added in the method of dormancy case 2.

It should be noted that the FDRA corresponding to a certain cell corresponding to the dormancy indicator may be a valid or invalid value.

In some embodiments, to reduce high power consumption caused by the terminal frequently monitoring a physical downlink control channel (Physical downlink control channel, PDCCH), in some scenarios such as carrier aggregation (Carrier Aggregation, CA), a dormancy-like (dormancy-like) behavior and a PDCCH-based Scell dormancy indicator field (Scell dormancy indication field) are introduced for a secondary cell (Scell).

A definition of the dormancy behavior may be: In this state, based on configuration of a network side, the terminal does not monitor a PDCCH or monitors a PDCCH with a very long period, for example, monitoring a PDCCH once every 2560 slots; and in this state, the terminal may perform channel state information (Channel State Information, CSI) measurement and reporting. In this state, the terminal is power-saving.

A definition of the non-dormancy behavior may be: In this state, the terminal monitors a PDCCH frequently based on configuration of a network side, for example, monitoring a PDCCH in each downlink slot; and the terminal may perform CSI measurement and reporting. In this state, power consumption of the terminal is high.

The network side may indicate the terminal to switch between the two states by using layer 1 based signaling (L1 based signaling) DCI, and the switching between these two states may be based on a BWP framework (BWP framework). For example, a PDCCH sent by a primary cell (Pcell) indicates the terminal to switch between the dormancy-like (dormancy-like) behavior and the non-dormancy-like (non-dormancy-like) behavior of the Scell. The PDCCH may be a PDCCH carrying non-scheduling (non-scheduling) DCI (the above case 2) or a PDCCH carrying scheduling (scheduling) DCI (the above case 1).

The Scell dormancy indicator for case 1 and case 2 may include the following:
The Scell dormancy indicator is achieved by indicating a BWP to switch to a dormant DL BWP (dormant DL BWP) to enable the terminal to enter a dormant state.

Scell dormancy indicator in case 1: An additional indicator field dedicated to dormancy indicator is required for a PDCCH to schedule data and dormancy indicator simultaneously.

Scell dormancy indicator in case 2: A PDCCH only carries a dormancy indicator, and does not schedule data. An existing indicator field is redefined for indicating a secondary cell to enter dormancy.

Usage conditions of the dormancy indicator in case 2 are as follows:
A search space set is provided to UE for monitoring a PDCCH to detect DCI format 1_1, and at least one of the following is satisfied:
Cyclic redundancy check (Cyclic redundancy check, CRC) of DCI format 1_1 is scrambled by a cell radio network temporary identifier (Cell Radio Network Temporary Identifier, C-RNTI) or a modulation and coding scheme-cell radio network temporary identifier (Modulation and coding scheme-Cell Radio Network Temporary Identifier, MCS-C-RNTI);
a one-shot hybrid automatic repeat request acknowledgment (HARQ-ACK) request field does not exist or has a value of 0;
the terminal obtains, through detection on the primary cell, DCI format 1_1 that does not include a carrier indicator field, or obtains, through detection on the primary cell, DCI format 1_1 that includes a carrier indicator field with a value equal to 0; and
resource allocation (resourceAllocation) = resource allocation type 0 (resourceAllocationType0), and all bits of a frequency domain resource assignment field of DCI format 1_1 are equal to 0; or resource allocation (resourceAllocation) = resource allocation type 1 (resourceAllocationType1), and all bits of a frequency domain resource assignment field of DCI format 1_1 are equal to 1; or resource allocation (resourceAllocation) = dynamic switch (dynamicSwitch), and all bits of a frequency domain resource assignment field in DCI format 1_1 are equal to 0 or 1.

A DCI indicator field redefined by dormancy case 2 is as follows:
The terminal considers that DCI format 1_1 indicates SCell to enter dormancy, instead of scheduling a PDSCH to perform receiving, and a field sequence interpreted for transport block 1 includes:
modulation and coding scheme;
new data indicator;
redundancy version;
HARQ process number;
antenna port; and
DMRS sequence initialization.

Indication content and a terminal behavior of dormancy case 2 may be as follows:
A bitmap is provided to each configured SCell in ascending order of SCell indexes.

A value of 0 of a bit in the bitmap indicates an activated DL BWP provided by a dormant BWP ID to a terminal of a corresponding activated SCell.

A value of 1 of a bit in the bitmap indicates:
if a current activated DL BWP is a dormant DL BWP, an activated DL BWP provided by the first BWP ID within an activation time to a terminal of a corresponding activated secondary cell;
if a current activated DL BWP is not a dormant DL BWP, a current activated DL BWP of a terminal for a corresponding activated SCell; or
the terminal setting an activated DL BWP to an indicated activated DL BWP.

In some embodiments, the first DCI may have a corresponding indicator field for each cell, including a frequency domain resource assignment (frequency domain resource assignment, FDRA) field, or including one indicator field shared by all cells, where a BWP indicator (BWP indicator) field is included. For example, the first DCI is multi-cell scheduling DCI (multi-cell scheduling DCI, mc-DCI).

In some embodiments, the dormancy indicator may be a Scell dormancy indicator (Scell dormancy indication). The premise of the dormancy indicator may be that the FDRA field is invalid. Because each cell in the mc-DCI has one corresponding FDRA, there may be one or more invalid FDRA fields. In a case that the mc-DCI satisfies an activation condition of the Scell dormancy indication, the Scell dormancy indicator may take effect. In an embodiment, the Scell dormancy indicator is an indication for all cells, not a dormancy indicator specifically for a cell corresponding to an invalid FDRA field.

In some embodiments, the BWP indicator field takes effect for all cells, but special cases in which some cells do not apply are not excluded.

Because both the BWP indicator field and the dormancy indicator field indicate the terminal to determine the target BWP, and both may act on a cell indicated by the first DCI (except for a specific cell that the indication does not apply), the method provided by embodiments of this application may determine, in a case that one first DCI includes the BWP indicator and the dormancy indicator simultaneously, which indication the terminal should apply and which BWP switching behavior the terminal should perform, thereby avoiding a decrease in communication performance caused by inconsistent understanding between the network-side device and the terminal.

A BWP determining method, a DCI sending method, an apparatus, a terminal, and a network-side device provided by embodiments of this application are described below in detail by using some embodiments and their application scenarios with reference to the accompanying drawings.

Refer to FIG. 2. FIG. 2 is a flowchart of a BWP determining method provided by an embodiment of this application. As shown in FIG. 2, the following steps are included:
Step 201: A terminal receives first DCI, where the first DCI includes a BWP indicator.

The first DCI may indicate at least one resource object. The resource object may be a cell, a carrier, a resource set, a BWP, a resource pool, or the like. For example, the first DCI is mc-DCI.

In some implementations, the first DCI is in DCI format (DCI format) 0-3 or DCI format 1-3.

The BWP indicator indicates the terminal to perform BWP switching or to determine a target BWP.

Step 202: The terminal determines a target BWP based on at least one of the BWP indicator or a dormancy indicator in a case that the first DCI satisfies an enabling condition of the dormancy indicator.

The enabling condition may be a protocol-agreed or network side configured condition associated with the dormancy indicator.

The determining a target BWP based on at least one of the BWP indicator or a dormancy indicator includes at least one of the following:
determining the target BWP based on the BWP indicator;
determining the target BWP based on the dormancy indicator; or
determining the target BWP based on the BWP indicator and the dormancy indicator.

The target BWP may be a target BWP to which the terminal is to switch. It should be noted that after determining the target BWP, the terminal switches to the target BWP. In a situation, if the target BWP is a BWP currently applied by the terminal, the terminal does not need to perform BWP switching. If the target BWP is not a BWP currently applied by the terminal, the terminal needs to perform BWP switching to switch to the target BWP.

It should be noted that the BWP currently applied by the terminal may be understood as a BWP currently activated by the terminal, that is, the BWP applied or activated by the terminal when the terminal receives the first DCI.

In some implementations, the determining the target BWP may be understood as performing a BWP switching related behavior and the determining the target BWP is a behavior related to BWP switching.

In this embodiment of this application, performing the above steps can determine the target BWP based on at least one of the BWP indicator or the dormancy indicator in a case that the first DCI includes the BWP indicator and the dormancy indicator, so as to determine a behavior of the terminal and further improve communication performance of the terminal. In addition, the behavior of step 202 may be a behavior agreed on in a protocol or configured by a network side, so that understanding of the terminal and the network side for the behavior of the terminal processing the DCI can be consistent. This helps improve performance of transmission between the terminal and the network side.

As an optional implementation, the terminal includes at least one of the following features:
The terminal does not expect to apply or execute the BWP indicator in a case that the dormancy indicator indicates that the target BWP is a dormant BWP;
the terminal does not expect to apply or execute the BWP indicator in a case that the BWP currently applied by the terminal is a dormant BWP and the dormancy indicator indicates that the target BWP is a non-dormant BWP;
the terminal does not expect both the dormancy indicator and the BWP indicator to indicate switching to a BWP not currently applied by the terminal;
the terminal does not expect that the target BWP indicated by the dormancy indicator is different from that indicated by the BWP indicator; and
the terminal expects that the target BWP indicated by the dormancy indicator is the same as that indicated by the BWP indicator.

That the terminal does not expect to apply or execute the BWP indicator in a case that the dormancy indicator indicates that the target BWP is a dormant BWP may be that the terminal does not apply or execute the BWP indicator in a case that the dormancy indicator indicates that the target BWP is the dormant BWP. In this case, the terminal may determine the target BWP based on the dormancy indicator; or in this case, the terminal may perform at least one of the following behaviors including but not limited to:
determining an error in DCI;
discarding the DCI;
not responding to the BWP indicator;
requesting the network side to resend DCI; and
feeding back a negative acknowledgement (Negative Acknowledgement, NACK) to the network side.

That the terminal does not expect to apply or execute the BWP indicator in a case that the BWP currently applied by the terminal is a dormant BWP and the dormancy indicator indicates that the target BWP is the non-dormant BWP may be that the terminal does not apply or execute the BWP indicator in a case that the BWP currently applied by the terminal is the dormant BWP and the dormancy indicator indicates that the target BWP is the non-dormant BWP. In this case, the terminal may determine the target BWP based on the dormancy indicator; or in this case, the terminal may perform at least one of the following behaviors including but not limited to:
determining an error in DCI;
discarding the DCI;
not responding to the BWP indicator;
requesting the network side to resend DCI; and
feeding back a negative acknowledgement (Negative Acknowledgement, NACK) to the network side.

That the terminal does not expect both the dormancy indicator and the BWP indicator to indicate switching to a BWP not currently applied by the terminal may be that the terminal does not expect the dormancy indicator and the BWP indicator to simultaneously indicate switching to the BWP not currently applied by the terminal. Optionally, simultaneous indication may be understood as indication in the same DCI, or indication in different DCIs at a same time.

The BWP not currently applied by the terminal may be understood as a BWP that is not currently applied by the terminal. In this embodiment of this application, the BWP currently applied by the terminal may also be referred to as a current BWP, and the BWP not currently applied by the terminal may also be referred to as a non-current BWP.

In some implementations, that the terminal does not expect both the dormancy indicator and the BWP indicator to indicate switching to a BWP not currently applied by the terminal may include: In a case that both the dormancy indicator and the BWP indicator indicate switching to the BWP not currently applied by the terminal, the terminal determines that the DCI is not expected by the terminal or the terminal determines that the DCI, or the dormancy indicator and the BWP indicator are not expected by the terminal; in this case, the terminal may perform at least one of the following behaviors including but not limited to:
determining an error in DCI;
discarding the DCI;
not responding to the dormancy indicator;
not responding to the BWP indicator;
requesting the network side to resend DCI; and
feeding back a negative acknowledgement (Negative Acknowledgement, NACK) to the network side.

In some implementations, that the terminal does not expect both the dormancy indicator and the BWP indicator to indicate switching to a BWP not currently applied by the terminal may be understood as that if the BWP indicator causes switching, it is unexpected that the dormancy indicator also causes the terminal to perform BWP switching.

In some implementations, the terminal does not expect that the target BWP indicated by the dormancy indicator is different from that indicated by the BWP indicator may include: In a case that the target BWP indicated by the dormancy indicator is different from that indicated by the BWP indicator, the terminal determines that the DCI is not expected by the terminal or the terminal determines that the DCI, or the dormancy indicator and the BWP indicator are not expected by the terminal; in this case, the terminal may perform at least one of the following behaviors including but not limited to:
determining an error in DCI;
discarding the DCI;
not responding to the dormancy indicator;
not responding to the BWP indicator;
requesting the network side to resend DCI; and
feeding back a NACK to the network side.

In some implementations, in a case that the terminal does not expect that the target BWP indicated by the dormancy indicator is different from that indicated by the BWP indicator, it may be required that the target BWIP indicated by the BWP indicator be the same as that indicated by the dormancy indicator. For example, in a case that the target BWP corresponding to the BWP indicator is the same as the target BWP corresponding to the dormancy indicator, it is determined that the indicated BWP is the target BWP or switching to the indicated BWP is performed.

That content indicated by the dormancy indicator is the same as that indicated by the BWP indicator may be that the dormancy indicator and the BWP indicator indicate the terminal to switch to a same BWP.

In some implementations, that the terminal expects that the target BWP indicated by the dormancy indicator is the same as that indicated by the BWP indicator may include: In a case that the content indicated by the dormancy indicator is the same as that indicated by the BWP indicator, the terminal determines that the DCI is expected by the terminal, or determines that the dormancy indicator and the BWP indicator are expected by the terminal; in this case, the terminal may perform at least one of the following behaviors including but not limited to:
responding to the dormancy indicator; and
responding to the BWP indicator.

As an optional implementation, that the target BWP indicated by the dormancy indicator is different from that indicated by the BWP indicator includes:
The dormancy indicator and the BWP indicator indicate switching to different target BWPs that are not currently applied by the terminal.

That the dormancy indicator and the BWP indicator indicate switching to different target BWPs that are not currently applied by the terminal means that a BWP that is not currently applied by the terminal and to which the dormancy indicator indicates switching to (the BWP is the target BWP indicated by the dormancy indicator) is different from a BWP that is not currently applied by the terminal and to which the dormancy indicator indicates switching to (the BWP is the target BWP indicated by the BWP indicator).

In this implementation, it can be achieved that the terminal does not expect that the dormancy indicator and the BWP indicator indicate switching to different target BWPs that are not currently applied by the terminal.

In some implementations, that the target BWP indicated by the dormancy indicator is different from that indicated by the BWP indicator is not limited to indicating to switch to different target BWPs that are not currently applied by the terminal, that is, that the target BWP indicated by the dormancy indicator is different from that indicated by the BWP indicator may not embody the concept of the target BWP. For example, the terminal does not expect the BWP indicator and the dormancy indicator to indicate the terminal (to switch to) different BWPs respectively or to indicate different target BWPs for the terminal respectively, that is, there are two features herein: The first feature is that the indicated BWPs are different, and the second feature is indicating switching to different BWPs.

That the first DCI satisfies the enabling condition of the dormancy indicator may be understood as the first DCI includes the dormancy indicator.

As an optional implementation, that the terminal determines the target BWP based on at least one of the BWP indicator or the dormancy indicator includes at least one of the following:
determining, by the terminal, the target BWP based on the BWP indicator in a case that a BWP currently applied by the terminal is a non-dormant BWP and the dormancy indicator indicates that the terminal maintains the currently applied BWP; and
determining, by the terminal, the target BWP based on the dormancy indicator in a case that the dormancy indicator indicates that the target BWP is a dormant BWP, or in a case that the BWP currently applied by the terminal is a dormant BWP and the dormancy indicator indicates that the target BWP is a non-dormant BWP.

The terminal determines the target BWP based on the BWP indicator in a case that the BWP currently applied by the terminal is the non-dormant BWP and the dormancy indicator indicates that the terminal maintains the currently applied BWP. In this case, in combination with the dormancy indicator, the terminal can further flexibly implement switching between non-dormant BWPs based on the BWP indicator. In an embodiment, in a case that a BWP currently applied by the terminal in a cell/cell group is a non-dormant BWP and the dormancy indicator indicates that the cell/cell group of the terminal maintains the currently applied BWP, the terminal determines a target BWP on the cell/cell group based on the BWP indicator.

In a case that the dormancy indicator indicates that the target BWP is the dormant BWP, or in a case that the BWP currently applied by the terminal is the dormant BWP and the dormancy indicator indicates that the target BWP is the non-dormant BWP, the terminal determines the target BWP based on the dormancy indicator. In this case, in combination with the BWP indicator and the dormancy indicator, the terminal can minimize impact of the BWP indicator on the dormancy indicator, that is, reduce impact on power saving of the terminal. In an embodiment, in a case that the dormancy indicator indicates that a target BWP in a cell/cell group is a dormant BWP, or in a case that a BWP currently applied by the terminal in a cell/cell group is a dormant BWP and the dormancy indicator indicates that a target BWP in the cell/cell group is a non-dormant BWP, the terminal determines the target BWP in the cell/cell group based on the dormancy indicator.

The terminal determines the target BWP based on the BWP indicator in a case that the BWP currently applied by the terminal is the non-dormant BWP and the dormancy indicator indicates that the terminal maintains the currently applied BWP. This can determine the target BWP based on the BWP indicator in a case that the dormancy indicator indicates that the terminal maintains the currently applied non-dormant BWP, to help improve service performance of the terminal, such as switching to the target BWP for service reception.

The terminal determines the target BWP based on the dormancy indicator in a case that the dormancy indicator indicates that the target BWP is a dormant BWP. In this way, the target BWP can be determined based on the dormancy indicator, to help reduce power consumption of the terminal, such as switching to the target BWP to enter a dormant state.

In a case that the BWP currently applied by the terminal is a dormant BWP and the dormancy indicator indicates that the target BWP is a non-dormant BWP, the terminal determines the target BWP based on the dormancy indicator. In this way, the target BWP is determined based on the dormancy indicator, to help reduce power consumption of the terminal, such as switching to the target BWP to enter a dormant state.

As an optional implementation, the enabling condition includes at least one of the following:
The first DCI includes dormancy indication information;
an FDRA field in the first DCI indicates an invalid value;
a hybrid automatic repeat request (Hybrid Automatic Repeat Request, HARQ) related indicator field is absent in the first DCI, or a HARQ related indicator field in the first DCI indicates a first value; and
a carrier indicator field is absent in the first DCI, or a carrier indicator field in the first DCI indicates a second value.

In one embodiment, that the first DCI includes dormancy indication information may include: The first DCI includes a dormancy indicator field. The dormancy indicator field is not implemented by reusing an existing scheduling-related field in the DCI, but is an indicator field specifically configured by the network-side device for dormancy indication.

In this embodiment of this application, the dormancy indication information included in the first DCI is not limited to the dormancy indicator field, for example, in some implementations, the dormancy indication information may be implemented by reusing a scheduling-related field in the DCI to achieve dormancy indication, so that the network may not configure the dormancy indicator field, but carry dormancy indication information by reusing another indicator field.

The invalid value, the first value, and the second value may be agreed on in a protocol or configured by a network side. For example, the first value and the second value may be 0.

That the FDRA field in the first DCI indicates the invalid value may be that one or more FDRA fields in the first DCI indicate an invalid value.

The HARQ related indicator field may include at least one of a one-shot (one-shot) HARQ request indicator field and a HARQ retransmission indicator field.

In the above implementation, the above target operation can be performed in a case that at least one of the above indicator fields is satisfied.

As an optional implementation, the determining a target BWP based on at least one of the BWP indicator or a dormancy indicator includes at least one of the following:
determining a target BWP of a first cell based on the BWP indicator, or determining a target BWP of a first cell based on the dormancy indicator, or determining a target BWP of a first cell based on the BWP indicator and the dormancy indicator; and
determining a target BWP of a second cell based on the BWP indicator, or determining a target BWP of a second cell based on the dormancy indicator, or determining a target BWP of a second cell based on the BWP indicator and the dormancy indicator.

In some implementations, the first cell may include at least one of the following:
a cell associated with FDRA being an invalid value in the first DCI;
a cell in a cell combination or cell set in which the cell associated with FDRA being the invalid value in the first DCI is located; and
a cell acted upon or indicated by the first DCI.

The cell associated with FDRA being the invalid value in the first DCI may be at least a part of cells in cells associated with or corresponding to the FDRA field being the invalid value.

The cell in the cell combination or cell set in which the cell associated with FDRA being the invalid value in the first DCI is located may be all cells in the cell combination or cell set in which cells associated with or corresponding to the FDRA field being the invalid value is located.

The cell acted upon by the first DCI may be all cells indicated by the first DCI, or may be a cell scheduled by the first DCI. For example, the first DCI may schedule data transmission for the cell. The cell indicated by the first DCI may also be a cell that does not schedule data but only carries indication information for indication.

In some implementations, the cell acted upon by the first DCI may also be a target cell, cell set, cell combination, carrier, BWP, frequency domain set, or the like indicated by the first DCI.

In some implementations, the second cell includes at least one of the following:
a cell associated with FDRA being a valid value in the first DCI;
a cell in a cell combination or cell set in which the cell associated with FDRA being the valid value in the first DCI is located; and
a cell acted upon or indicated by the first DCI.

The valid value may be agreed on in a protocol or configured by a network side.

The cell associated with FDRA being the valid value in the first DCI may be at least a part of cells in cells associated with or corresponding to the FDRA field being the valid value.

The cell in the cell combination or cell set in which the cell associated with FDRA being the valid value in the first DCI is located may be all cells in the cell combination or cell set in which the cell associated with or corresponding to the FDRA field of the valid value is located.

The determining the target BWP of the first cell based on the BWP indicator may be determining that a BWP indicated by the BWP indicator is the target BWP of the first cell.

The determining a target BWP of a first cell based on the dormancy indicator may be determining that a BWP indicated by the dormancy indicator is the target BWP of the first cell.

The determining the target BWP of the second cell based on the BWP indicator may be determining that a BWP indicated by the BWP indicator is the target BWP of the second cell.

The determining the target BWP of the second cell based on the dormancy indicator may be determining that a BWP indicated by the dormancy indicator is the target BWP of the second cell.

The determining the target BWP of the first cell or the second cell based on the BWP indicator and the dormancy indicator may be understood as that the terminal needs to read or the specific indication content of the BWP indicator and the dormancy indicator to judge and determine the target BWP of the first cell or the second cell.

In the above implementation, the target BWP of the first cell or the second cell can be flexibly determined.

Optionally, the determining a target BWP of a first cell based on the dormancy indicator includes:
determining the target BWP of the first cell based on the dormancy indicator in a case that the enabling condition includes that the first DCI includes dormancy indication information.

Optionally, the determining the target BWP of the second cell based on the dormancy indicator includes:
determining the target BWP of the second cell based on the dormancy indicator in a case that the enabling condition includes that the first DCI includes dormancy indication information.

For example, the target BWP of the first cell or the second cell is determined based on indication of the dormancy indicator field in a case that the first DCI includes a dormancy indicator field.

In some implementations, in a case that the first DCI includes dormancy indication information, the first cell includes a cell acted upon or indicated by the first DCI, and the second cell includes a cell acted upon or indicated by the first DCI, regardless of whether the FDRA field is valid or invalid.

For example, in a case that the first DCI includes a dormancy indicator field, all cells indicated by the first DCI determine the target BWP based on indication of the dormancy field. Optionally, the BWP indicator is ignored.

In this implementation, the target BWP of the first cell can be determined based on the dormancy indicator. This helps reduce power consumption of the terminal. For example, the terminal switches to the target BWP to enter a dormant state.

Optionally, the determining a target BWP based on at least one of the BWP indicator or a dormancy indicator includes at least one of the following:
first determining a target BWP based on the BWP indicator, and then determining a target BWP based on the dormancy indicator; or first determining a target BWP based on the dormancy indicator, and then determining a target BWP based on the BWP indicator;
determining a target BWP based on the BWP indicator in a case that the BWP indicator indicates switching to a BWP not currently applied by the terminal and the dormancy indicator indicates maintaining a BWP currently applied by the terminal; or determining a target BWP based on the dormancy indicator in a case that the BWP indicator indicates switching to a BWP not currently applied by the terminal and the dormancy indicator indicates maintaining a BWP currently applied by the terminal;
determining a target BWP based on the dormancy indicator in a case that the dormancy indicator indicates switching to a BWP not currently applied by the terminal and the BWP indicator indicates maintaining a BWP currently applied by the terminal; or determining a target BWP based on the BWP indicator in a case that the dormancy indicator indicates switching to a BWP not currently applied by the terminal and the BWP indicator indicates maintaining a BWP currently applied by the terminal;
determining a target BWP based on the BWP indicator in a case that the BWP indicator indicates switching to a BWP not currently applied by the terminal and the dormancy indicator indicates switching to a BWP not currently applied by the terminal; or determining a target BWP based on the dormancy indicator in a case that the BWP indicator indicates switching to a BWP not currently applied by the terminal and the dormancy indicator indicates switching to a BWP not currently applied by the terminal;
maintaining, by the terminal, a currently applied BWP unchanged in a case that the BWP indicator indicates switching to a BWP not currently applied by the terminal, the dormancy indicator indicates switching to the BWP not currently applied by the terminal, and a target BWP indicated by the BWP indicator is different from that indicated by the dormancy indicator; and
in a case that a target BWP indicated by the BWP indicator is the same as that indicated by the dormancy indicator, determining, by the terminal, that the target BWPs indicated by the BWP indicator and the dormancy indicator are the target BWP.

The first determining the target BWP based on the BWP indicator, and then determining the target BWP based on the dormancy indicator may be first determining the target BWP based on the BWP indicator, and then determining the target BWP based on the dormancy indicator in a case that the target BWP is determined based on the BWP indicator. Switching may not be performed after the target BWP is determined based on the BWP indicator, and BWP switching is performed after the target BWP is determined based on the dormancy indicator.

The first determining the target BWP based on the dormancy indicator, and then determining the target BWP based on the BWP indicator may be first determining the target BWP based on the dormancy indicator, and then determining the target BWP based on the BWP indicator in a case that the target BWP is determined based on the dormancy indicator. Switching may not be performed after the target BWP is determined based on the dormancy indicator, and switching is performed after the target BWP is determined based on the BWP indicator.

The determining the target BWP based on the BWP indicator in a case that the BWP indicator indicates switching to the BWP not currently applied by the terminal and the dormancy indicator indicates maintaining the BWP currently applied by the terminal may be switching to the target BWP. The determining the target BWP based on the BWP indicator may be equivalent to switching to the target BWP indicated by the BWP indicator, where the target BWP is not the BWP currently applied by the terminal.

In the implementation of determining the target BWP based on the dormancy indicator in a case that the BWP indicator indicates switching to the BWP not currently applied by the terminal and the dormancy indicator indicates maintaining the BWP currently applied by the terminal, the dormancy indicator indicates maintaining the BWP currently applied by the terminal. Therefore, it may be understood that the target BWP indicated by the dormancy indicator is the BWP currently applied by the terminal. The determining the target BWP based on the dormancy indicator may be equivalent to maintaining the BWP currently applied by the terminal unchanged.

The determining the target BWP based on the dormancy indicator in a case that the dormancy indicator indicates switching to the BWP not currently applied by the terminal and the BWP indicator indicates maintaining the BWP currently applied by the terminal may be switching to the target BWP. The determining the target BWP based on the dormancy indicator may be equivalent to switching to the target BWP indicated by the dormancy indicator, where the target BWP is not the BWP currently applied by the terminal.

In the implementation of determining the target BWP based on the BWP indicator in a case that the dormancy indicator indicates switching to the BWP not currently applied by the terminal and the BWP indicator indicates maintaining the BWP currently applied by the terminal, the BWP indicator indicates maintaining the BWP currently applied by the terminal. Therefore, it may be understood that the target BWP indicated by the BWP indicator is the BWP currently applied by the terminal. The determining the target BWP based on the BWP indicator may be equivalent to maintaining the BWP currently applied by the terminal unchanged.

The determining the target BWP based on the BWP indicator in a case that the BWP indicator indicates switching to the BWP not currently applied by the terminal and the dormancy indicator indicates switching to the BWP not currently applied by the terminal may be switching to the target BWP. The determining the target BWP based on the BWP indicator may be equivalent to switching to the target BWP indicated by the BWP indicator. The target BWP is not the BWP currently applied by the terminal. Alternatively, it may be understood that the dormancy indicator is ignored if both the BWP indicator and the dormancy indicator cause BWP switching or have indicated different BWPs.

The determining the target BWP based on the dormancy indicator in a case that the BWP indicator indicates switching to the BWP not currently applied by the terminal and the dormancy indicator indicates switching to the BWP not currently applied by the terminal may be switching to the target BWP. The determining the target BWP based on the dormancy indicator may be equivalent to switching to the target BWP indicated by the dormancy indicator. The target BWP is not the BWP currently applied by the terminal. Alternatively, it may be understood that the BWP indicator is ignored if both the BWP indicator and the dormancy indicator cause BWP switching or have indicated different BWPs.

The maintaining, by the terminal, the currently applied BWP unchanged in a case that the BWP indicator indicates switching to the BWP not currently applied by the terminal, the dormancy indicator indicates switching to the BWP not currently applied by the terminal, and the target BWP indicated by the BWP indicator is different from that indicated by the dormancy indicator may be understood as: If the BWP indicator causes switching, it is unexpected that the dormancy indicator also indicates switching; or if the dormancy indicator causes switching, it is unexpected that the BWP indicator also indicates switching; in this case, the terminal maintains the currently applied BWP unchanged, that is, does not perform switching.

The determining, by the terminal in a case that the target BWP indicated by the BWP indicator is the same as that indicated by the dormancy indicator, that the target BWPs indicated by the BWP indicator and the dormancy indicator are the target BWP may be understood as requiring that the target BWP corresponding to the BWP indicator be the same as the target BWP corresponding to the dormancy indicator. In this case, it is determined that the target BWPs indicated by the BWP indicator and the dormancy indicator are the target BWP.

The above implementation provides a plurality of implementations of determining the target BWP, so that more scenarios or services can be applied, to improve DCI processing compatibility.

Optionally, the determining a target BWP based on at least one of the BWP indicator or a dormancy indicator includes at least one of the following:
determining a target BWP based on the dormancy indicator, and not responding to the BWP indicator; and
determining a target BWP based on the BWP indicator, and not responding to the dormancy indicator.

The not responding to the BWP indicator may be ignoring the BWP indicator or not executing the BWP indicator, or following only a dormancy indicator if the dormancy indicator overrides the BWP indicator, that is, there is the dormancy indicator.

Switching to the target BWP is performed after the target BWP is determined based on the dormancy indicator.

In this implementation, the not responding to the BWP indicator may be implemented; in this way, the target BWP is determined based on the dormancy indicator, to help reduce power consumption of the terminal, such as switching to the target BWP to enter a dormant state.

In some implementations, not responding to the BWP indicator may also be implemented, and whether to respond to the dormancy indicator is not limited.

The not responding to the dormancy indicator may be ignoring the dormancy indicator or not executing the dormancy indicator, or following only a BWP indicator if the BWP indicator overrides the dormancy indicator, that is, if there is the BWP indicator.

Switching to the target BWP can be performed after the target BWP is determined based on the BWP indicator. Specifically, whether the terminal has performed BWP switching depends on whether the target BWP and the currently applied BWP are the same. If they are the same BWP, the terminal continues to apply the current BWP; if they are not the same BWP, the terminal performs BWP switching to switch to the target BWP. The same situation is not described herein again.

In this implementation, the not responding to the dormancy indicator may be implemented; in this case, the target BWP is determined based on the dormancy indicator, to help improve service performance of the terminal, such as switching to the target BWP for service transmission.

In some implementations, not responding to the dormancy indicator may also be implemented, and whether to respond to the BWP indicator is not limited.

As an optional implementation, the invalid value is determined based on a resource allocation type or subcarrier spacing (Subcarrier Spacing, SCS) configuration associated with a first BWP, and the first BWP includes at least one of the following:
a target BWP indicated by the BWP indicator;
a target BWP indicated by the dormancy indicator;
a BWP currently applied by the terminal; and
a preset BWP.

The first BWP may be agreed on in a protocol or indicated by a network side.

The preset BWP is a specific BWP or default BWP that is agreed on in a protocol or indicated by a network side, such as a BWP corresponding to an BWP ID being equal to 0.

That the invalid value is determined based on the resource allocation type or SCS configuration associated with the first BWP may be determining, based on the resource allocation type or SCS configuration associated with the first BWP, whether at least one FDRA field in the first DCI is invalid.

In this implementation, because the invalid value of the FDRA field is determined based on the resource allocation type or SCS configuration associated with the first BWP, whether the FDRA field is an invalid value can be flexibly and reliably determined, to improve reliability of determining the target BWP.

As an optional implementation, the determining a target BWP based on at least one of the BWP indicator or a dormancy indicator includes:
in a case that a cell acted upon or indicated by the first DCI is not configured with the dormancy indicator, determining, based on the BWP indicator, a target BWP of the cell acted upon or indicated by the first DCI.

In this implementation, the target BWP of the cell acted upon or indicated by the first DCI can be determined based on the BWP indicator in a case that the cell is not configured with the dormancy indicator, to improve service performance of the terminal, such as switching to the target BWP for service transmission.

In some implementations, the determining the target BWP based on the dormancy indicator may be determining the target BWP based on the dormancy indicator in a case that the terminal is configured with or supports a dormancy indication function or the cell acted upon or indicated by the first DCI is not configured with a dormancy indicator.

In this embodiment of this application, the terminal receives the first downlink control information DCI, where the first DCI includes the bandwidth part BWP indicator; and the terminal determines the target BWP based on at least one of the BWP indicator or the dormancy indicator in a case that the first DCI satisfies the enabling condition of the dormancy indicator. In this way, the target BWP is determined based on at least one of the BWP indicator or the dormancy indicator in a case that the first DCI includes the BWP indicator and the dormancy indicator, so as to determine a behavior of the terminal and further improve communication performance of the terminal.

Refer to FIG. 3. FIG. 3 is a flowchart of a DCI sending method according to an embodiment of this application. As shown in FIG. 3, the following steps are included:
Step 301: A network-side device sends first downlink control information DCI to a terminal, where the first DCI includes a bandwidth part BWP indicator, and the first DCI satisfies an enabling condition of a dormancy indicator.

Optionally, the first DCI indicates at least one resource object.

Optionally, the enabling condition includes at least one of the following:

The first DCI includes dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

Optionally, the method further includes:
determining a target BWP based on at least one of the BWP indicator or the dormancy indicator.

It should be noted that this embodiment is used as an implementation of the corresponding network-side device in the embodiment shown in FIG. 2. For its specific implementation, refer to the related description of the embodiment shown in FIG. 2. To avoid repetition, this embodiment is not described herein again.

An example in which the first DCI is mc-DCI is used below to describe the method provided by this implementation of this application:

A terminal receives mc-DCI. The mc-DCI may be in DCI format 3-0 or DCI format 3-1. The mc-DCI schedules one or more physical uplink shared channels (Physical Uplink Shared Channel, PUSCH) or physical downlink shared channels (Physical downlink shared channel, PDSCH) of one or more cells.

A plurality of cells may be grouped into a plurality of cell sets (cell set), and one cell set includes at least 2 cells. For example, cells (cell1/2/3/4/5/6/7/8) are grouped into two cell sets: cell set (cell1/2/3/4) and cell set (cell5/6/7/8).

A cell set may be divided into a plurality of cell combinations (cell combination), and a cell combination includes one or more cells. For example, a cell set (cell1/2/3/4) may include cell combinations (cell1/2/3, cell1/2/4, cell1/3).

In a case that the mc-DCI satisfies the enabling condition of the dormancy indicator, for example, the mc-DCI carries the dormancy indicator, there is also a BWP indicator field in the mc-DCI, and both indicators indicate a BWP switching behavior. A corresponding BWP switching related behavior of the terminal is described below by using an example. Details are as follows:

In an embodiment, the mc-DCI schedules and indicates four cells, where FDRA fields of cells 0, 1, and 3 are valid values, an FDRA field of cell 4 is an invalid value, and the mc-DCI satisfies the enabling condition of the dormancy indicator.

In this embodiment, one optional implementation is as follows: Cells 0, 1, and 3 may be used as a network for normal scheduling; in this case, cells 0, 1, and 3 do not execute the dormancy indicator or ignore the dormancy indicator, and perform a related BWP switching behavior based on the BWP indicator. In addition, because the FDRA field of cell 4 is invalid, cell 4 ignores the BWP indicator and follows indication of the dormancy indicator field to perform a corresponding BWP switching behavior.

In this embodiment, another optional implementation is as follows: Because the mc-DCI satisfies the enabling condition of the dormancy indicator at this time, cells 0, 1, 3, and 4 all perform a corresponding BWP switching behavior based on the dormancy indicator. That is, cells 0, 1, 3, and 4 ignore the BWP indicator, and perform the corresponding BWP switching behavior based on the dormancy indicator. Optionally, that the mc-DCI satisfies the enabling condition of the dormancy indicator includes at least one of the following:

The mc-DCI carries the dormancy indicator;
an FDRA field in the mc-DCI indicates an invalid value;
the mc-DCI does not include a HARQ related indicator field, or a HARQ related indicator field indicates a first value (such as 0), where the HARQ related indicator field includes at least one of a one-shot HARQ request indicator field and a HARQ retransmission indicator field; and
the mc-DCI does not include a carrier indicator field, or the carrier indicator field indicates a second value (such as 0).

Optionally, if among cells 0 to 4, a cell or a plurality of cells (for example, cell 3) is not within a range correspondingly indicated by the dormancy indicator, cell 3 still follows the BWP indicator to perform the corresponding BWP behavior.

In this embodiment, another optional implementation is as follows: The terminal specifically determines BWP switching related behaviors based on respective indication content of the BWP indicator and the dormancy indicator.

Optionally, the terminal first performs a BWP switching behavior based on the BWP indicator (this step is an intermediate step, and the terminal may not actually perform this step), and then performs a BWP switching behavior based on the dormancy indicator; or the terminal first performs a BWP switching behavior based on the dormancy indicator (this step is an intermediate step, and the terminal may not actually perform this step), and then performs a BWP switching behavior based on the BWP indicator. It may be understood that the terminal may not actually perform the intermediate step of BWP switching, but directly perform the final BWP switching behavior.

Optionally, the terminal preferentially follows an indication, in the BWP indicator and the dormancy indicator, that indicates that the terminal needs to perform BWP switching (it may be understood that if it indicates that the terminal still maintains a currently activated BWP, the terminal does not need to perform BWP switching). In an embodiment, if both indicators indicate that the terminal needs to perform BWP switching and switched-to target BWPs are different, the BWP indicator is followed to perform switching, or the dormancy indicator is followed to perform switching. In another embodiment, the network-side device needs to avoid a situation in which target BWPs that the network-side device indicates to switch to are inconsistent, that is, the terminal does not expect the BWP indicator and the dormancy indicator to indicate the terminal to switch to different BWPs respectively.

The situation that the terminal does not expect to occur may be understood as an error situation.

In another embodiment, the mc-DCI indicates N cells, where FDRA in mc-DCI corresponding to M cells is an invalid value, and M is an integer less than or equal to N. Optionally, the invalid value is determined based on a resource allocation type (resource allocation type) or an SCS associated with a BWP currently applied by the terminal (that is, a source BWP). That is, whether the FDRA field is valid is determined based on the resource allocation type associated with the currently applied BWP. In another embodiment, the invalid value is determined based on a resource allocation type or an SCS associated with a target BWP to which the terminal switches. That is, whether the FDRA field is valid is determined based on a resource allocation type associated with a target BWP that the terminal plans to switch to.

In this embodiment of this application, the following may be achieved: DCI indicates N cells, where FDRA of M cells is an invalid value. At this time, the invalid value is determined based on at least one of the following:
a BWP currently applied by the terminal (a source BWP), a target BWP, and a preset BWP (such as a default BWP).

In this embodiment of this application, the following may be achieved: If this DCI has indicated that FDRA of some cells is an invalid value, and further carries a dormancy indicator (data and the dormancy indicator are not scheduled), or regardless of whether FDRA of some cells is indicated as an invalid value, and a dormancy indicator is further carried (data and the dormancy indicator are scheduled simultaneously), the terminal performs at least one of the following behaviors:

If FDRA associated with cell 0 is a valid value, cell 0 does not need to consider the dormancy indicator, but determines, based on only the BWP indicator, whether BWP switching is needed;
if FDRA associated with cell 0 is an invalid value or a valid value, cell 0 still needs to consider the dormancy indicator; and
if FDRA associated with cell 1 is an invalid value and cell 1 corresponds to the dormancy indicator (for example, corresponds to a bit), or FDRA associated with cell 1 is a valid value or an invalid value and cell 1 corresponds to the dormancy indicator (for example, corresponds to a bit), there may be the following three situations:
   situation A: Based on indication of the BWP indicator, cell 1 needs to consider BWP switching; and based on the dormancy indicator, cell 1 also needs to perform BWP switching;
   situation B: Based on indication of the BWP indicator, cell 1 does not need to consider BWP switching; and based on the dormancy indicator, cell 1 needs to perform BWP switching; and
   situation C: Based on indication of the BWP indicator, cell 1 does not need to consider BWP switching; and based on the dormancy indicator, cell 1 does not need to perform BWP switching.

For the three situations, for cell 1, or for at least a cell combination in which cell 1 is located, or for a cell set, or for all cells with invalid FDRA, the following cases may be executed:
Case 1: First determine a target BWP based on the BWP indicator, and then determine a target BWP based on the dormancy indicator; or vice versa.
Case 2: Ignore the BWP indicator, and determine, based on only the dormancy indicator, how to perform BWP switching; or follow only the dormancy indicator if the dormancy indicator overrides the BWP indicator, that is, there is the dormancy indicator.
Case 3: Ignore the dormancy indicator, and determine, based on only the BWP indicator, how to perform BWP switching; or follow only the BWP indicator if the BWP indicator overrides the dormancy indicator, that is, there is the BWP indicator.
Case 4-1: Require that the target BWP corresponding to the BWP indicator be the same as the target BWP corresponding to the dormancy indicator.
Case 4-2: If the BWP indicator causes switching, it is unexpected that the dormancy indicator also indicates switching.
Case 4-3: If the dormancy indicator causes switching, it is unexpected that the BWP indicator also indicates switching.
Case 5: If the BWP indicator does not cause switching, it is unexpected that the dormancy indicator causes switching, or if the dormancy indicator does not cause switching, it is unexpected that the BWP indicator causes switching.

Optionally, if the dormancy indicator and the BWP indicator cause BWP switching or correspond to different BWPs, the BWP indicator is ignored.

If FDRA associated with cell 2 is an invalid value, but cell 2 does not correspond to the dormancy indicator (for example, there is no corresponding bit), cell 2 does not transmit or receive, and a related behavior may not be defined. In addition, BWP switching does not need to be performed based on the BWP indicator.

In addition, in this embodiment of this application, the BWP indicator may be interpreted first for FDRA. Details are as follows:
One implementation is as follows: Whether BWP switching is needed is determined based on the BWP indicator, where in this implementation, whether FDRA is an invalid value is determined based on the source BWP. After it is determined that the FDRA is an invalid value, whether to assume or actually perform or consider switching or no switching based on the BWP indicator; or whether to trigger switching is determined based on the dormancy indicator.

One implementation is as follows: Whether BWP switching is needed is determined based on the BWP indicator, where in this implementation, whether FDRA is an invalid value is determined based on a target BWP. After it is determined that the FDRA is an invalid value, whether to assume or actually perform or consider switching or no switching based on the BWP indicator; or whether to trigger switching is determined based on the dormancy indicator.

In this embodiment of this application, an application priority or application order of the BWP indicator and the dormancy indicator and an executed terminal behavior may be designed and agreed on in a case that the mc-DCI includes these two indicators simultaneously. The specific behavior includes at least one of the following:
ignoring the BWP indicator, and determining the target BWP based on only the dormancy indicator; and
ignoring the dormancy indicator, and determining the target BWP based on only the BWP indicator.

The terminal may perform the above behavior on only a cell in which the FDRA field indicates invalid.

The terminal may determine BWP switching based on the BWP indicator on a validly scheduled cell in which the FDRA field is valid.

The terminal does not expect the dormancy indicator and the BWP indicator to indicate the terminal to perform BWP switching simultaneously; or
the terminal does not expect the BWP indicator and the dormancy indicator to indicate the terminal to switch to different BWPs respectively.

The BWP determining method provided by embodiments of this application may be performed by a BWP determining apparatus. In embodiments of this application, the BWP determining apparatus executing the BWP determining method is used as an example to describe a BWP determining apparatus provided by an embodiment of this application.

The DCI sending method provided by embodiments of this application may be performed by a DCI sending apparatus. In embodiments of this application, the DCI sending apparatus executing the DCI sending method is used as an example to describe a DCI sending apparatus provided by an embodiment of this application.

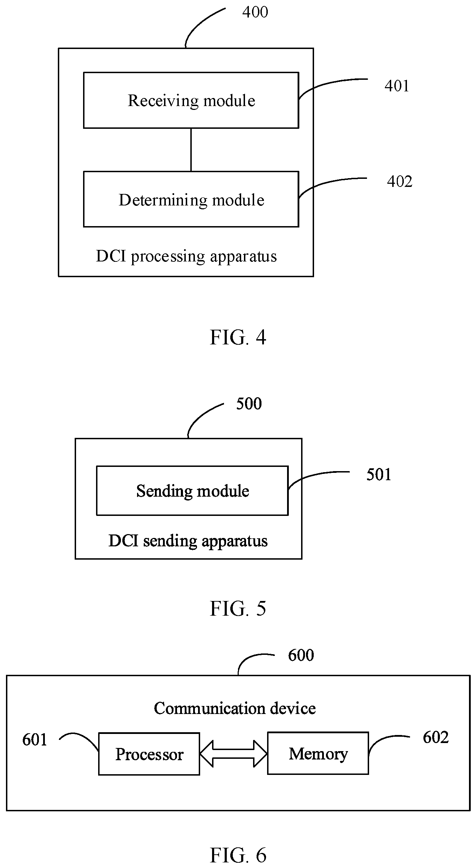

Refer to FIG. 4. FIG. 4 is a structural diagram of a BWP determining apparatus provided by an embodiment of this application. As shown in FIG. 4, the BWP determining apparatus 400 includes:
a receiving module 401, configured to determine a target BWP based on at least one of the BWP indicator or the dormancy indicator; and
a determining module 402, configured to determine a target BWP based on at least one of the BWP indicator or a dormancy indicator in a case that the first DCI satisfies an enabling condition of the dormancy indicator.

Optionally, the determining, by the terminal, a target BWP based on at least one of the BWP indicator or a dormancy indicator includes at least one of the following:
determining, by the terminal, the target BWP based on the BWP indicator in a case that a BWP currently applied by the terminal is a non-dormant BWP and the dormancy indicator indicates that the terminal maintains the currently applied BWP; and
determining, by the terminal, the target BWP based on the dormancy indicator in a case that the dormancy indicator indicates that the target BWP is a dormant BWP, or in a case that the BWP currently applied by the terminal is a dormant BWP and the dormancy indicator indicates that the target BWP is a non-dormant BWP.

Optionally, the terminal includes at least one of the following features:
The terminal does not expect to apply or execute the BWP indicator in a case that the dormancy indicator indicates that the target BWP is a dormant BWP;
the terminal does not expect to apply or execute the BWP indicator in a case that a BWP currently applied by the terminal is a dormant BWP and the dormancy indicator indicates that the target BWP is a non-dormant BWP;
the terminal does not expect both the dormancy indicator and the BWP indicator to indicate switching to a BWP not currently applied by the terminal;
the terminal does not expect that the target BWP indicated by the dormancy indicator is different from that indicated by the BWP indicator; and
the terminal expects that the target BWP indicated by the dormancy indicator is the same as that indicated by the BWP indicator.

Optionally, that the target BWP indicated by the dormancy indicator is different from that indicated by the BWP indicator includes:
The dormancy indicator and the BWP indicator indicate switching to different target BWPs that are not currently applied by the terminal.

Optionally, the first DCI indicates at least one resource object.

Optionally, the enabling condition includes at least one of the following:
The first DCI includes dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

Optionally, that the first DCI includes dormancy indication information includes:
The first DCI includes a dormancy indicator field.

Optionally, the determining a target BWP based on at least one of the BWP indicator or a dormancy indicator includes at least one of the following:
determining a target BWP of a first cell based on the BWP indicator, or determining a target BWP of a first cell based on the dormancy indicator, or determining a target BWP of a first cell based on the BWP indicator and the dormancy indicator; and
determining a target BWP of a second cell based on the BWP indicator, or determining a target BWP of a second cell based on the dormancy indicator, or determining a target BWP of a second cell based on the BWP indicator and the dormancy indicator.

Optionally, the first cell includes at least one of the following:
a cell associated with FDRA being an invalid value in the first DCI;
a cell in a cell combination or cell set in which the cell associated with FDRA being the invalid value in the first DCI is located; and
a cell acted upon or indicated by the first DCI;
   or
the second cell includes at least one of the following:
   a cell associated with FDRA being a valid value in the first DCI;
   a cell in a cell combination or cell set in which the cell associated with FDRA being the valid value in the first DCI is located; and
   a cell acted upon or indicated by the first DCI.

Optionally, the determining a target BWP of a first cell based on the dormancy indicator includes:
determining the target BWP of the first cell based on the dormancy indicator in a case that the enabling condition includes that the first DCI includes dormancy indication information.

Optionally, the determining a target BWP based on at least one of the BWP indicator or a dormancy indicator includes at least one of the following:
first determining a target BWP based on the BWP indicator, and then determining a target BWP based on the dormancy indicator; or first determining a target BWP based on the dormancy indicator, and then determining a target BWP based on the BWP indicator;
determining a target BWP based on the BWP indicator in a case that the BWP indicator indicates switching to a BWP not currently applied by the terminal and the dormancy indicator indicates maintaining a BWP currently applied by the terminal; or determining a target BWP based on the dormancy indicator in a case that the BWP indicator indicates switching to a BWP not currently applied by the terminal and the dormancy indicator indicates maintaining a BWP currently applied by the terminal;
determining a target BWP based on the dormancy indicator in a case that the dormancy indicator indicates switching to a BWP not currently applied by the terminal and the BWP indicator indicates maintaining a BWP currently applied by the terminal; or determining a target BWP based on the BWP indicator in a case that the dormancy indicator indicates switching to a BWP not currently applied by the terminal and the BWP indicator indicates maintaining a BWP currently applied by the terminal;
determining a target BWP based on the BWP indicator in a case that the BWP indicator indicates switching to a BWP not currently applied by the terminal and the dormancy indicator indicates switching to a BWP not currently applied by the terminal; or determining a target BWP based on the dormancy indicator in a case that the BWP indicator indicates switching to a BWP not currently applied by the terminal and the dormancy indicator indicates switching to a BWP not currently applied by the terminal;
maintaining, by the terminal, a currently applied BWP unchanged in a case that the BWP indicator indicates switching to a BWP not currently applied by the terminal, the dormancy indicator indicates switching to the BWP not currently applied by the terminal, and a target BWP indicated by the BWP indicator is different from that indicated by the dormancy indicator; and
in a case that a target BWP indicated by the BWP indicator is the same as that indicated by the dormancy indicator, determining, by the terminal, that the target BWPs indicated by the BWP indicator and the dormancy indicator are the target BWP.

Optionally, the determining a target BWP based on at least one of the BWP indicator or a dormancy indicator includes at least one of the following:
determining a target BWP based on the dormancy indicator, and not responding to the BWP indicator; and
determining a target BWP based on the BWP indicator, and not responding to the dormancy indicator.

Optionally, the invalid value is determined based on a resource allocation type or subcarrier spacing SCS configuration associated with a first BWP, and the first BWP includes at least one of the following:
a target BWP indicated by the BWP indicator;
a target BWP indicated by the dormancy indicator;
a BWP currently applied by the terminal; and
a preset BWP.

Optionally, the determining a target BWP includes:
in a case that a cell acted upon or indicated by the first DCI is not configured with the dormancy indicator, determining, based on the BWP indicator, a target BWP of the cell acted upon or indicated by the first DCI.

The BWP determining apparatus may improve communication performance of the terminal.

The BWP determining apparatus in this embodiment of this application may be an electronic device, for example, an electronic device with an operating system, or a component in an electronic device such as an integrated circuit or a chip. For example, the electronic device may be a terminal, or may be a device other than the terminal. For example, the terminal may include but is not limited to the terminal types enumerated in embodiments of this application, and the other device may be a server, a network attached storage (Network Attached Storage, NAS), or the like. This is not specifically limited in this embodiment of this application.

The BWP determining apparatus provided by this embodiment of this application can implement each process implemented by the method embodiment shown in FIG. 2, and achieve the same technical effect. To avoid repetition, details are not described herein again.

Refer to FIG. 5. FIG. 5 is a structural diagram of a DCI sending apparatus provided by an embodiment of this application. As shown in FIG. 5, the DCI sending apparatus 1000 includes:
a sending module 1001, configured to send first downlink control information DCI to a terminal, where the first DCI includes a bandwidth part BWP indicator, and the first DCI satisfies an enabling condition of a dormancy indicator.

Optionally, the first DCI indicates at least one resource object.

Optionally, the enabling condition includes at least one of the following:
The first DCI includes dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

The DCI sending apparatus may improve communication performance of the terminal.

The DCI sending apparatus in this embodiment of this application may be an electronic device, for example, an electronic device with an operating system, or a component in an electronic device such as an integrated circuit or a chip. The electronic device may be a terminal or a network-side device.

The DCI sending apparatus provided by this embodiment of this application can implement each process implemented by the method embodiment shown in FIG. 3, and achieve the same technical effect. To avoid repetition, details are not described herein again.

Optionally, as shown in FIG. 6, an embodiment of this application further provides a communication device 600, including a processor 601 and a memory 602. A program or instructions runnable on the processor 601 are stored on the memory 602. For example, when the communication device 600 is a terminal, each step of the BWP determining method embodiment is implemented when the program or instructions are executed by the processor 601, and the same technical effect can be achieved. For example, when the communication device 600 is a network-side device, each step of the DCI sending method embodiment is implemented when the program or instructions are executed by the processor 601, and the same technical effect can be achieved. To avoid repetition, details are not described herein again.

An embodiment of this application further provides a communication device, including a processor and a communication interface. The communication interface is configured to receive first downlink control information DCI, where the first DCI includes a bandwidth part BWP indicator. The processor is configured for the terminal to determine a target BWP based on at least one of the BWP indicator or a dormancy indicator in a case that the first DCI satisfies an enabling condition of the dormancy indicator. This embodiment of the communication device corresponds to the above perception measurement result processing method embodiment, and each implementation process and implementation of the above method embodiment are applicable to this embodiment of the communication device, and the same technical effect can be achieved.

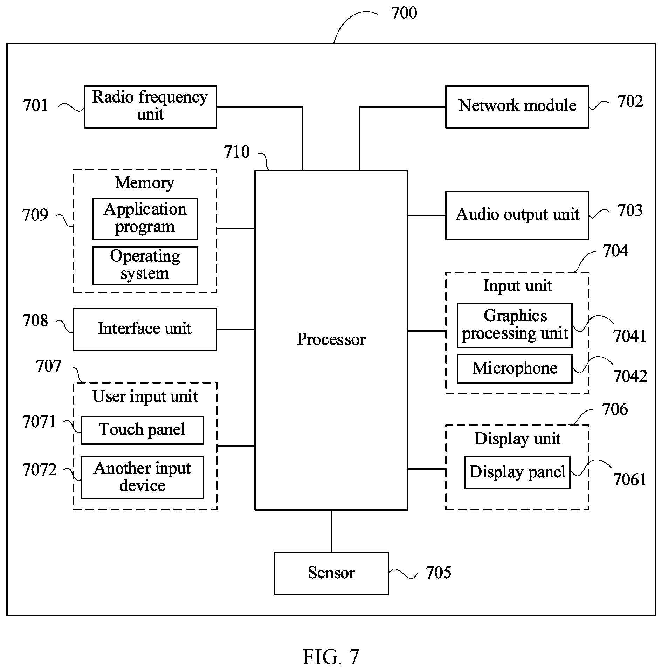

Specifically, FIG. 7 is a schematic diagram of a hardware structure of a terminal implementing an embodiment of this application. The terminal 700 includes but is not limited to at least a part of components of: a radio frequency unit 701, a network module 702, an audio output unit 703, an input unit 704, a sensor 705, a display unit 706, a user input unit 707, an interface unit 708, a memory 709, a processor 710, and the like.

Those skilled in the art can understand that the terminal 700 may further include a power supply (such as a battery) for supplying power to each component, and the power supply may be logically connected to the processor 710 via a power management system, so as to implement functions such as charging, discharging, and power consumption management via the power management system. The terminal structure shown in FIG. 7 does not constitute a limitation to the terminal. The terminal may include more or fewer components than those shown, or combine some components, or arrange different components. Details are not described herein.

It should be understood that, in this embodiment of this application, the input unit 704 may include a graphics processing unit (Graphics Processing Unit, GPU) 7041 and a microphone 7042. The graphics processing unit 7041 processes image data of still pictures or videos obtained by an image capture apparatus (such as a camera) in a video capture mode or an image capture mode. The display unit 706 may include a display panel 7061, which may be configured in the form of a liquid crystal display, an organic light emitting diode, or the like. The user input unit 707 includes at least one of a touch panel 7071 and another input terminal 7072. The touch panel 7071 is also referred to as a touch screen. The touch panel 7071 may include two parts: a touch detection apparatus and a touch controller. The another input terminal 7072 may include but are not limited to a physical keyboard, a function key (such as a volume control key or a switch key), a trackball, a mouse, a joystick, or the like. Details are not described herein.

In this embodiment of this application, after receiving downlink data from the network side terminal, the radio frequency unit 701 may transmit it to the processor 710 for processing. In addition, the radio frequency unit 701 may send uplink data to the network side terminal. Generally, the radio frequency unit 701 includes, but is not limited to, an antenna, an amplifier, a transceiver, a coupler, a low noise amplifier, a duplexer, and the like.

The memory 709 may be used to store software programs or instructions as well as various data. The memory 709 may mainly include a first storage area storing programs or instructions and a second storage area storing data, where the first storage area may store an operating system, an application or instructions required for at least one function (such as a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes, but is not limited to, these and any other suitable types of memories.

The processor 710 may include one or more processing units. Optionally, the processor 710 integrates an application processor and a modem processor, where the application processor mainly processes operations related to the operating system, user interface, and application programs, and the modem processor mainly processes wireless communication signals, such as a baseband processor. It may be understood that the modem processor may not be integrated into the processor 710.

The radio frequency unit 701 is configured to receive first downlink control information DCI, where the first DCI includes a bandwidth part BWP indicator.

The processor 710 is configured for the terminal to determine a target BWP based on at least one of the BWP indicator or a dormancy indicator in a case that the first DCI satisfies an enabling condition of the dormancy indicator.

Optionally, the determining a target BWP based on at least one of the BWP indicator or a dormancy indicator includes at least one of the following:
determining, by the terminal, the target BWP based on the BWP indicator in a case that a BWP currently applied by the terminal is a non-dormant BWP and the dormancy indicator indicates that the terminal maintains the currently applied BWP; and
determining, by the terminal, the target BWP based on the dormancy indicator in a case that the dormancy indicator indicates that the target BWP is a dormant BWP, or in a case that the BWP currently applied by the terminal is a dormant BWP and the dormancy indicator indicates that the target BWP is a non-dormant BWP.

Optionally, the terminal includes at least one of the following features:
The terminal does not expect to apply or execute the BWP indicator in a case that the dormancy indicator indicates that the target BWP is a dormant BWP;
the terminal does not expect to apply or execute the BWP indicator in a case that a BWP currently applied by the terminal is a dormant BWP and the dormancy indicator indicates that the target BWP is a non-dormant BWP;
the terminal does not expect both the dormancy indicator and the BWP indicator to indicate switching to a BWP not currently applied by the terminal;
the terminal does not expect that the target BWP indicated by the dormancy indicator is different from that indicated by the BWP indicator; and
the terminal expects that the target BWP indicated by the dormancy indicator is the same as that indicated by the BWP indicator.

Optionally, that the target BWP indicated by the dormancy indicator is different from that indicated by the BWP indicator includes:
The dormancy indicator and the BWP indicator indicate switching to different target BWPs that are not currently applied by the terminal.

Optionally, the first DCI indicates at least one resource object.

Optionally, that the target BWP indicated by the dormancy indicator is different from that indicated by the BWP indicator includes:
The dormancy indicator and the BWP indicator indicate switching to different target BWPs that are not currently applied by the terminal.

Optionally, the enabling condition includes at least one of the following:
The first DCI includes dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

Optionally, that the first DCI includes dormancy indication information includes:
The first DCI includes a dormancy indicator field.

Optionally, the determining a target BWP based on at least one of the BWP indicator or a dormancy indicator includes at least one of the following:
determining a target BWP of a first cell based on the BWP indicator, or determining a target BWP of a first cell based on the dormancy indicator, or determining a target BWP of a first cell based on the BWP indicator and the dormancy indicator; and
determining a target BWP of a second cell based on the BWP indicator, or determining a target BWP of a second cell based on the dormancy indicator, or determining a target BWP of a second cell based on the BWP indicator and the dormancy indicator.

Optionally, the first cell includes at least one of the following:
a cell associated with FDRA being an invalid value in the first DCI;
a cell in a cell combination or cell set in which the cell associated with FDRA being the invalid value in the first DCI is located; and
a cell acted upon or indicated by the first DCI;
   or
the second cell includes at least one of the following:
   a cell associated with FDRA being a valid value in the first DCI;
   a cell in a cell combination or cell set in which the cell associated with FDRA being the valid value in the first DCI is located; and
   a cell acted upon or indicated by the first DCI.

Optionally, the determining a target BWP based on at least one of the BWP indicator or a dormancy indicator includes at least one of the following:
determining the target BWP of the first cell based on the dormancy indicator in a case that the enabling condition includes that the first DCI includes dormancy indication information.

Optionally, the determining the target BWP based on the BWP indicator and the dormancy indicator includes at least one of the following:
first determining a target BWP based on the BWP indicator, and then determining a target BWP based on the dormancy indicator; or first determining a target BWP based on the dormancy indicator, and then determining a target BWP based on the BWP indicator;
determining a target BWP based on the BWP indicator in a case that the BWP indicator indicates switching to a BWP not currently applied by the terminal and the dormancy indicator indicates maintaining a BWP currently applied by the terminal; or determining a target BWP based on the dormancy indicator in a case that the BWP indicator indicates switching to a BWP not currently applied by the terminal and the dormancy indicator indicates maintaining a BWP currently applied by the terminal;
determining a target BWP based on the dormancy indicator in a case that the dormancy indicator indicates switching to a BWP not currently applied by the terminal and the BWP indicator indicates maintaining a BWP currently applied by the terminal; or determining a target BWP based on the BWP indicator in a case that the dormancy indicator indicates switching to a BWP not currently applied by the terminal and the BWP indicator indicates maintaining a BWP currently applied by the terminal;
determining a target BWP based on the BWP indicator in a case that the BWP indicator indicates switching to a BWP not currently applied by the terminal and the dormancy indicator indicates switching to a BWP not currently applied by the terminal; or determining a target BWP based on the dormancy indicator in a case that the BWP indicator indicates switching to a BWP not currently applied by the terminal and the dormancy indicator indicates switching to a BWP not currently applied by the terminal;
maintaining, by the terminal, a currently applied BWP unchanged in a case that the BWP indicator indicates switching to a BWP not currently applied by the terminal, the dormancy indicator indicates switching to the BWP not currently applied by the terminal, and a target BWP indicated by the BWP indicator is different from that indicated by the dormancy indicator; and
in a case that a target BWP indicated by the BWP indicator is the same as that indicated by the dormancy indicator, determining, by the terminal, that the target BWPs indicated by the BWP indicator and the dormancy indicator are the target BWP.

Optionally, the determining a target BWP based on at least one of the BWP indicator or a dormancy indicator includes at least one of the following:
determining a target BWP based on the dormancy indicator, and not responding to the BWP indicator; and
determining a target BWP based on the BWP indicator, and not responding to the dormancy indicator.

Optionally, the invalid value is determined based on a resource allocation type or subcarrier spacing SCS configuration associated with a first BWP, and the first BWP includes at least one of the following:
a target BWP indicated by the BWP indicator;
a target BWP indicated by the dormancy indicator;
a BWP currently applied by the terminal; and
a preset BWP.

Optionally, the determining a target BWP includes:
in a case that a cell acted upon or indicated by the first DCI is not configured with the dormancy indicator, determining, based on the BWP indicator, a target BWP of the cell acted upon or indicated by the first DCI.

The terminal can improve communication performance of the terminal.

It may be understood that the implementation processes of each implementation mentioned in this embodiment can refer to the relevant descriptions of the above method embodiments, and achieve the same or corresponding technical effect. To avoid repetition, details are not described herein again.

An embodiment of this application further provides a device, including a processor and a communication interface. The communication interface is coupled to the processor, and the processor is configured to run a program or instructions to implement the steps of the method embodiment shown in FIG. 3. The embodiment of the device corresponds to the above DCI sending method embodiment, and each implementation process and implementation of the above method embodiment can be applied to the embodiment of the device, and can achieve the same technical effect.

An embodiment of this application further provides a device, including a processor and a communication interface. The communication interface is configured to send first downlink control information DCI to a terminal, where the first DCI includes a bandwidth part BWP indicator, and the first DCI satisfies an enabling condition of a dormancy indicator.

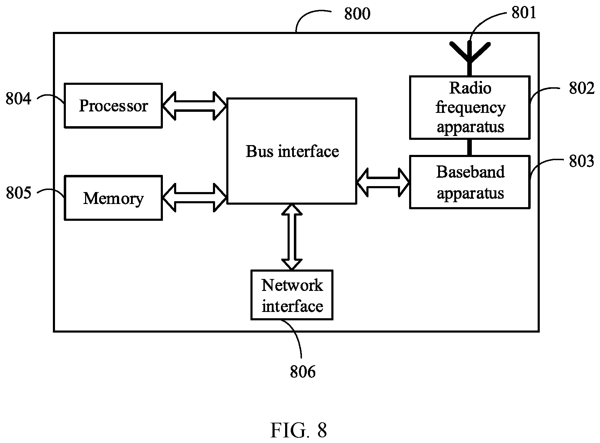

Specifically, an embodiment of this application further provides a network-side device. As shown in FIG. 8, the device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information and sends it to the radio frequency apparatus 802, and the radio frequency apparatus 802 processes the received information and sends it out through the antenna 801.

The perception measurement method in the above embodiments can be implemented by the baseband apparatus 803, where the baseband apparatus 803 includes a baseband processor.

The baseband apparatus 803 may include, for example, at least one baseband board. A plurality of chips are provided on the baseband board, as shown in FIG. 8. One chip is, for example, a baseband processor connected to the memory 805 through a bus interface, to call a program in the memory 805 and execute the device operations shown in the above method embodiments.

The device may further include a network interface 806, where the interface is, for example, a common public radio interface (Common Public Radio Interface, CPRI).

Specifically, the device 800 of the embodiment of this application further includes instructions or a program stored on the memory 805 and runnable on the processor 804, where the processor 804 calls the instructions or program in the memory 805 to execute the method performed by each module shown in FIG. 5, and the same technical effect is achieved. To avoid repetition, details are not described herein again.

The radio frequency apparatus 802 is configured to send first downlink control information DCI to a terminal, where the first DCI includes a bandwidth part BWP indicator, and the first DCI satisfies an enabling condition of a dormancy indicator.

Optionally, the first DCI indicates at least one resource object.

Optionally, the enabling condition includes at least one of the following:
The first DCI includes dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

The device can improve communication performance of the terminal.

It may be understood that the implementation processes of each implementation mentioned in this embodiment can refer to the relevant descriptions of the above method embodiments, and achieve the same or corresponding technical effect. To avoid repetition, details are not described herein again.

An embodiment of this application further provides a readable storage medium. A program or instructions are stored on the readable storage medium, and when the program or instructions are executed by a processor, each process of the above BWP determining method embodiment or DCI sending method embodiment is implemented, and can achieve the same technical effect. To avoid repetition, details are not described herein again.

The processor is the processor in the terminal described in the above embodiments. The readable storage medium includes a computer readable storage medium, such as a computer read only memory ROM, a random access memory RAM, a magnetic disk, or an optical disk. In some examples, the readable storage medium may be a non-transitory readable storage medium.

Another embodiment of this application provides a wireless communication system, including a terminal and a network-side device. The terminal may be used to perform the steps of the BWP determining method provided by embodiments of this application, and the network-side device may be used to perform the steps of the DCI sending method provided by embodiments of this application.

Another embodiment of this application provides a chip. The chip includes a processor and a communication interface. The communication interface is coupled to the processor. The processor is configured to run a program or instructions to implement each process of the above BWP determining method embodiment or DCI sending method embodiment, and the same technical effect can be achieved. To avoid repetition, details are not described herein again.

It should be understood that the chip mentioned in embodiments of this application may also be referred to as a system-level chip, system chip, chip system, system on chip, or the like.

Another embodiment of this application provides a computer program/program product. The computer program/program product is stored in a storage medium. The computer program/program product is executed by at least one processor to implement each process of the above BWP determining method embodiment or DCI sending method embodiment, and the same technical effect can be achieved. To avoid repetition, details are not described herein again.

It should be noted that, in this specification, the terms "include", "comprise" or any other variants thereof are intended to cover non-exclusive inclusion, so that a process, method, article, or apparatus including a series of elements not only includes those elements, but also includes other elements not explicitly listed, or elements inherent to such process, method, article, or apparatus. Without further limitation, an element defined by the statement "including a ..." does not exclude the presence of other identical elements in the process, method, article, or apparatus including the element. In addition, it should be pointed out that the scope of the methods and apparatus in embodiments of this application is not limited to performing functions in the order shown or discussed, and may also include performing functions substantially simultaneously or in reverse order according to the involved functions, for example, the described methods may be performed in an order different from that described, and various steps may also be added, omitted or combined. In addition, features described with reference to certain examples may be combined in other examples.

Through the description of the above implementations, those skilled in the art can clearly understand that the methods in the above embodiments may be implemented by means of computer software products plus necessary general hardware platforms, and certainly, may also be implemented by hardware. The computer software product is stored in a storage medium (such as a ROM, a RAM, a magnetic disk, or an optical disk), and includes several instructions to make a terminal or network-side device execute the method described in each embodiment of this application.

Embodiments of this application have been described above with reference to the accompanying drawings, but this application is not limited to the above specific embodiments. The above specific embodiments are only examples, not restrictive. Those of ordinary skill in the art can make many forms of embodiments under the inspiration of this application without departing from the purpose of this application and the protection scope of the claims. These embodiments all belong to the protection of this application.

## Claims

1. A BWP determining method, comprising:
receiving, by a terminal, first downlink control information DCI, wherein the first DCI comprises a bandwidth part BWP indicator; and
determining, by the terminal, a target BWP based on at least one of the BWP indicator or a dormancy indicator in a case that the first DCI satisfies an enabling condition of the dormancy indicator.

2. The method according to claim 1, wherein the determining, by the terminal, a target BWP based on at least one of the BWP indicator or a dormancy indicator comprises at least one of the following:
determining, by the terminal, the target BWP based on the BWP indicator in a case that a BWP currently applied by the terminal is a non-dormant BWP and the dormancy indicator indicates that the terminal maintains the currently applied BWP; and
determining, by the terminal, the target BWP based on the dormancy indicator in a case that the dormancy indicator indicates that the target BWP is the dormant BWP, or in a case that the BWP currently applied by the terminal is a dormant BWP and the dormancy indicator indicates that the target BWP is a non-dormant BWP.

3. The method according to claim 1 or 2, wherein the terminal comprises at least one of the following features:
the terminal does not expect to apply or execute the BWP indicator in a case that the dormancy indicator indicates that the target BWP is a dormant BWP;
the terminal does not expect to apply or execute the BWP indicator in a case that a BWP currently applied by the terminal is a dormant BWP and the dormancy indicator indicates that the target BWP is a non-dormant BWP;
the terminal does not expect both the dormancy indicator and the BWP indicator to indicate switching to a BWP not currently applied by the terminal;
the terminal does not expect that the target BWP indicated by the dormancy indicator is different from that indicated by the BWP indicator; and
the terminal expects that the target BWP indicated by the dormancy indicator is the same as that indicated by the BWP indicator.

4. The method according to claim 1 or 2, wherein the determining, by the terminal, a target BWP based on at least one of the BWP indicator or a dormancy indicator in a case that the first DCI satisfies an enabling condition of the dormancy indicator comprises:
not responding, by the terminal, to the BWP indicator or the dormancy indicator in a case that a frequency domain resource assignment FDRA field in the first DCI indicates an invalid value.

5. The method according to any one of claims 1 to 4, wherein the first DCI indicates at least one resource object.

6. The method according to any one of claims 1 to 5, wherein the enabling condition comprises at least one of the following:
the first DCI comprises dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

7. The method according to claim 6, wherein that the first DCI comprises dormancy indication information comprises:
the first DCI comprises a dormancy indicator field.

8. The method according to any one of claims 1 to 7, wherein the determining a target BWP based on at least one of the BWP indicator or a dormancy indicator comprises at least one of the following:
determining a target BWP of a first cell based on the BWP indicator, or determining a target BWP of a first cell based on the dormancy indicator, or determining a target BWP of a first cell based on the BWP indicator and the dormancy indicator; and
determining a target BWP of a second cell based on the BWP indicator, or determining a target BWP of a second cell based on the dormancy indicator, or determining a target BWP of a second cell based on the BWP indicator and the dormancy indicator.

9. The method according to claim 8, wherein the first cell comprises at least one of the following:
a cell associated with FDRA being an invalid value in the first DCI;
a cell in a cell combination or cell set in which the cell associated with FDRA being the invalid value in the first DCI is located; and
a cell acted upon or indicated by the first DCI;
or
the second cell comprises at least one of the following:
a cell associated with FDRA being a valid value in the first DCI;
a cell in a cell combination or cell set in which the cell associated with FDRA being the valid value in the first DCI is located; and
a cell acted upon or indicated by the first DCI.

10. The method according to claim 8 or 9, wherein the determining a target BWP of a first cell based on the dormancy indicator comprises:
determining the target BWP of the first cell based on the dormancy indicator in a case that the enabling condition comprises that the first DCI comprises dormancy indication information.

11. The method according to any one of claims 1 to 7, wherein the determining a target BWP based on at least one of the BWP indicator or a dormancy indicator comprises at least one of the following:
first determining a target BWP based on the BWP indicator, and then determining a target BWP based on the dormancy indicator; or first determining a target BWP based on the dormancy indicator, and then determining a target BWP based on the BWP indicator;
determining a target BWP based on the BWP indicator in a case that the BWP indicator indicates switching to a BWP not currently applied by the terminal and the dormancy indicator indicates maintaining a BWP currently applied by the terminal; or determining a target BWP based on the dormancy indicator in a case that the BWP indicator indicates switching to a BWP not currently applied by the terminal and the dormancy indicator indicates maintaining a BWP currently applied by the terminal;
determining a target BWP based on the dormancy indicator in a case that the dormancy indicator indicates switching to a BWP not currently applied by the terminal and the BWP indicator indicates maintaining a BWP currently applied by the terminal; or determining a target BWP based on the BWP indicator in a case that the dormancy indicator indicates switching to a BWP not currently applied by the terminal and the BWP indicator indicates maintaining a BWP currently applied by the terminal;
determining a target BWP based on the BWP indicator in a case that the BWP indicator indicates switching to a BWP not currently applied by the terminal and the dormancy indicator indicates switching to a BWP not currently applied by the terminal; or determining a target BWP based on the dormancy indicator in a case that the BWP indicator indicates switching to a BWP not currently applied by the terminal and the dormancy indicator indicates switching to a BWP not currently applied by the terminal;
maintaining, by the terminal, a currently applied BWP unchanged in a case that the BWP indicator indicates switching to a BWP not currently applied by the terminal, the dormancy indicator indicates switching to the BWP not currently applied by the terminal, and a target BWP indicated by the BWP indicator is different from that indicated by the dormancy indicator; and
in a case that a target BWP indicated by the BWP indicator is the same as that indicated by the dormancy indicator, determining, by the terminal, that the target BWPs indicated by the BWP indicator and the dormancy indicator are the target BWP.

12. The method according to any one of claims 1 to 7, wherein the determining a target BWP based on at least one of the BWP indicator or a dormancy indicator comprises at least one of the following:
determining a target BWP based on the dormancy indicator, and not responding to the BWP indicator; and
determining a target BWP based on the BWP indicator, and not responding to the dormancy indicator.

13. The method according to claim 6 or 9, wherein the invalid value is determined based on a resource allocation type or subcarrier spacing SCS configuration associated with a first BWP, and the first BWP comprises at least one of the following:
a target BWP indicated by the BWP indicator;
a target BWP indicated by the dormancy indicator;
a BWP currently applied by the terminal; and
a preset BWP.

14. The method according to any one of claims 1 to 7, wherein the determining a target BWP based on at least one of the BWP indicator or a dormancy indicator comprises:
in a case that a cell acted upon or indicated by the first DCI is not configured with the dormancy indicator, determining, based on the BWP indicator, a target BWP of the cell acted upon or indicated by the first DCI.

15. A DCI sending method, comprising:
sending, by a network-side device, first downlink control information DCI to a terminal, wherein the first DCI comprises a bandwidth part BWP indicator, and the first DCI satisfies an enabling condition of a dormancy indicator.

16. The method according to claim 15, wherein the first DCI indicates at least one resource object.

17. The method according to claim 15 or 16, wherein the enabling condition comprises at least one of the following:
the first DCI comprises dormancy indication information;
a frequency domain resource assignment FDRA field in the first DCI indicates an invalid value;
a hybrid automatic repeat request HARQ related indicator field is absent in the first DCI, or a HARQ related indicator field in the first DCI indicates a first value; and
a carrier indicator field is absent in the first DCI, or a carrier indicator field in the first DCI indicates a second value.

18. A BWP determining apparatus, comprising:
a receiving module, configured to receive first downlink control information DCI, wherein the first DCI comprises a bandwidth part BWP indicator; and
a determining module, configured to determine a target BWP based on at least one of the BWP indicator or a dormancy indicator in a case that the first DCI satisfies an enabling condition of the dormancy indicator.

19. A DCI sending apparatus, comprising:
a sending module, configured to send first downlink control information DCI to a terminal, wherein the first DCI comprises a bandwidth part BWP indicator, and the first DCI satisfies an enabling condition of a dormancy indicator.

20. A communication device, comprising a processor and a memory, wherein the memory stores a program or instructions runnable on the processor; and when the program or instructions are executed by the processor, the steps of the BWP determining method according to any one of claims 1 to 14 are implemented, or when the program or instructions are executed by the processor, the steps of the DCI sending method according to any one of claims 15 to 17 are implemented.

21. A readable storage medium, wherein a program or instructions are stored on the readable storage medium; and when the program or instructions are executed by a processor, the steps of the BWP determining method according to any one of claims 1 to 14 are implemented, or when the program or instructions are executed by the processor, the steps of the DCI sending method according to any one of claims 15 to 17 are implemented.

22. A chip, wherein the chip comprises a processor and a communication interface, the communication interface is coupled to the processor, and the processor is configured to run a program or instructions to implement the method according to any one of claims 1 to 17.

23. A computer program product, wherein the program product is executed by at least one processor to implement the method according to any one of claims 1 to 17.

24. An electronic device, wherein the electronic device is configured to perform the method according to any one of claims 1 to 17.
